# EUROPÄISCHE PATENTSCHRIFT

(11) **EP 1 982 848 B1**
(45) Veröffentlichungstag und Bekanntmachung des Hinweises auf die Patenterteilung: **02.06.2010**
(21) Anmeldenummer: 08151400.2
(22) Anmeldetag: 14.02.2008
(51) Int. Cl.: B60C 11/14, B60C 11/04

(54) **Fahrzeugluftreifen**
Pneumatic tyres for a vehicle
Pneus de véhicule

(30) Priorität: 20.04.2007 DE 102007018806
(43) Veröffentlichungstag der Anmeldung: 22.10.2008
(73) Patentinhaber: Continental Reifen Deutschland GmbH, 30165 Hannover (DE)
(72) Erfinder: Neumann, Axel, 31559 Hohnhorst (DE); Kaeder, Ansgar, 31515 Wunstorf (DE); Fidan, Saddetin, 30827 Garbsen (DE); Maldonado, Cesar, 30161 Hannover (DE); Wiese, Klaus, 30559 Hannover (DE); Van Agen, Rob, 30659 Hannover (DE)
(74) Vertreter: Finger, Karsten

(56) Entgegenhaltungen:
- EP-A- 0 320 215
- JP-A- 6 087 306
- JP-A- 2004 314 783

## Beschreibung

### Fahrzeugluftreifen

Die Erfindung betrifft einen Fahrzeugluftreifen mit einem profilierten Laufstreifen mit in Umfangsrichtung umlaufenden Profilelementen, wie Profilrippen und Blockreihen, und zumindest einer sich in Umfangsrichtung erstreckenden, Profilelemente voneinander trennenden Umfangsnut, deren seitliche Flanken und deren Nutboden mit einer anisotropen Gummischicht, welche Kurzfasern oder Fäden als Festigkeitsträger enthält, bedeckt sind.

Aus der WO 2005/063508 A1 ist ein Fahrzeugluftreifen der eingangs genannten Art bekannt. Dieser Fahrzeugluftreifen weist die üblichen Bauteile, wie eine Radialkarkasse, einen Gürtelverband und einen profilierten Laufstreifen auf, welcher aus einem ersten elastomeren Material besteht. Zumindest eine der Umfangsnuten im profilierten Laufstreifen ist mit einem zweiten elastomeren Material ausgekleidet, welches Kurzfasern aus einem anorganischen Material, beispielsweise aus Polyamid, enthält. Das Verhältnis des Elastizitätsmoduls E' (bei 100°C) des zweiten elastomeren Materials zum Elastizitätsmodul E' (bei 100°C) des ersten elastomeren Materials beträgt zumindest 1,3, insbesondere zwischen 1,3 und 1,5. Durch diese Maßnahme sollen Verformungen der Seitenflanken der Nuten und der Profilelemente zwischen benachbarten Nuten, in Umfangsrichtung oder in axialer Richtung betrachtet, bei Kurvenfahrt, beim Bremsen oder Beschleunigen deutlich reduziert werden.

Aus der EP 1 108 566 B1 ist ein Fahrzeugluftreifen mit einem Laufstreifen mit mehreren blockförmigen Profilelementen bekannt, welche aus einer Gummizusammensetzung hergestellt sind, die als Füllstoffe Ruß und Silika sowie Kurzfasern einer Länge von 10 mm oder weniger und mit einem Durchmesser von 0,01 mm bis 0,1 mm. Die Kurzfasern können aus Polyethylen bestehen. Dadurch sollen die Kontakt- bzw. Griffeigenschaften des Reifens auch dann gewährleistet sein, wenn die Profilelemente mit einer höheren Anzahl von Einschnitten versehen werden. Bei dem aus der DE 102 08 273 A1 bekannten Fahrzeugluftreifen besteht der Kontaktbereich des Laufstreifens aus einem faserverstärkten Material, wobei die Fasern derart orientiert sind, dass die Längssteifigkeit des Kontaktbereichs kleiner ist als seine Quersteifigkeit, indem im Wesentlichen alle Fasern in einer senkrecht zur Fahrbahn orientierten Projektion im Wesentlichen quer zur Abrollrichtung verlaufen. Dieser Idee liegt die Erkenntnis zu Grunde, dass bei einer Kurvenfahrt der äußere Bereich der Kontaktfläche relativ großen Längsscherungen ausgesetzt ist, sodass dieser äußere Bereich nur relativ gering zur Abstützung von Sturzseitenkräften nutzbar ist. Durch die Maßnahme, die quer zur Abrollrichtung wirksame Quersteifigkeit stärker auszuprägen, können die Auswirkungen der Scherungen zu Gunsten der nutzenbringenden Querkraftübertragung manipuliert werden.

Aus der JP 2003/054216 oder der EP 320 215 A1 ist es bekannt, bei einem aus einer Anzahl von Blockreihen bestehenden Laufstreifen eines Fahrzeugluftreifens die Blockflanken, welche Quernuten begrenzen, mit einer Gummischicht auszukleiden, die Kurzfasern enthält. Die Kurzfasern sind in der Querrichtung orientiert.

Der Erfindung liegt die Aufgabe zu Grunde, bei einem Fahrzeugluftreifen der eingangs genannten Art die Handlingeigenschaften, insbesondere die Seitenführungseigenschaften, zu verbessern.

Gelöst wird die gestellte Aufgabe erfindungsgemäß dadurch, dass die mit Fasern oder Fäden verstärkte Gummischicht in Umfangsrichtung einen Elastizitätsmodul aufweist, der größer ist als ihr Elastizitätsmodul quer zur Umfangsrichtung, wobei das Verhältnis des Elastizitätsmodul in Umfangsrichtung zu jenem quer zur Umfangsrichtung zwischen 2 und 20 beträgt.

Gemäß der Erfindung weist die Gummischicht, welche die Umfangsnuten im Laufstreifen auskleidet, in Umfangsrichtung einen sehr hohen Elastizitätsmodul und quer zur Umfangsrichtung - in Lateralrichtung und in Radialrichtung - einen im Vergleich zum Elastizitätsmodul in Umfangsrichtung sehr niedrigen Elastizitätsmodul auf. Der Erfindung liegt die Erkenntnis zu Grunde, dass für gute Handlingeigenschaften eine hohe Block- und Rippensteifigkeit in Umfangsrichtung von Vorteil ist. Ein gegenüber dem Elastizitätsmodul in Umfangsrichtung niedriger Elastizitätsmodul in Radialrichtung ist für gute Komforteigenschaften und eine geringe Geräuschentwicklung besonders günstig. Ein niedriger Elastizitätsmodul der Gummischicht am Nutgrund in Lateralrichtung trägt dazu bei, das Entstehen von Rissen im Nutgrund zu vermeiden. Dabei hat sich herausgestellt, dass sich diese vorteilhaften technischen Effekte vor Allem dann erzielen lassen, wenn das Verhältnis des Elastizitätsmoduls in Umfangsrichtung zu jenem quer zur Umfangsrichtung zwischen 2 und 20 beträgt.

Gemäß einer bevorzugten Ausführungsform beträgt das Verhältnis des Elastizitätsmodul in Umfangsrichtung zu jenem quer zur Umfangsrichtung zwischen 7 und 10. In diesem Bereich lassen sich optimale Auswirkungen auf die Handlingeigenschaften erzielen.

Wie bereits erwähnt ist für gute Handlingeigenschaften eine hohe Block- und Rippensteifigkeit in Umfangsrichtung von Vorteil. Eine Anzahl vorteilhafter Maßnahmen trägt nun dazu bei, dass Verhältnis des Elastizitätsmoduls in Umfangsrichtung zu jenem quer zur Umfangsrichtung zu optimieren und, bei Bedarf, gezielt zu beeinflussen. Zu diesen Maßnahmen gehört etwa, dass die Kurzfasern oder -fäden zur Längsrichtung unter einem Winkel von 0° bis 60°, insbesondere von 0° bis 30°, orientiert sind. Bei einer weiteren diesbezüglich vorteilhaften Maßnahme wird die Gummischicht aus mehreren Lagen von mit Kurzfasern oder -fäden verstärkten Kautschukmischungen hergestellt. Dabei kann die Orientierung der Kurzfasern oder -fäden zur Umfangsrichtung in diesen Lagen unterschiedlich sein, insbesondere kann eine gekreuzte Anordnung vorliegen, sodass die Steifigkeit in Umfangsrichtung besonders gut optimiert werden kann. Für die Kurzfasern oder -fäden eignen sich organische und/oder anorganische Materialien, beispielsweise Amide, ferner Polyester, Rayon oder Hybridmaterialien aus den erwähnten Materialien.

Die Dicke der Kurzfasern beträgt bevorzugt zwischen 0,005 mm und 0,1 mm, ihre Länge zwischen 0,5 mm und 10 mm. Bei einer weiteren, vorteilhaften Ausführungsform können die Fäden in der Gummischicht von einer oder mehreren Gewebelagen stammen, wobei die Fäden die Kettfäden sind und eine Dicke zwischen 0,3 und 0,8 mm aufweisen.

Die Gummischicht selbst kann in einer Stärke zwischen 0,2 mm und 2 mm erstellt sein, je nachdem ob sie aus einer Lage oder aus mehreren Lagen von mit Fäden oder Fasern verstärkten Kautschukmischungen erstellt wird.

Der Elastizitätsmodul der Gummischicht in Umfangsrichtung sollte zwischen 4 MPa und 20 MPa, insbesondere zwischen 10 MPa und 15 MPa, betragen. Der Elastizitätsmodul der Gummischicht quer zur Umfangsrichtung sollte zwischen 0,5 MPa und 3 MPa, insbesondere zwischen 1 MPa und 2 Mpa, betragen.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigt die einzige Figur,

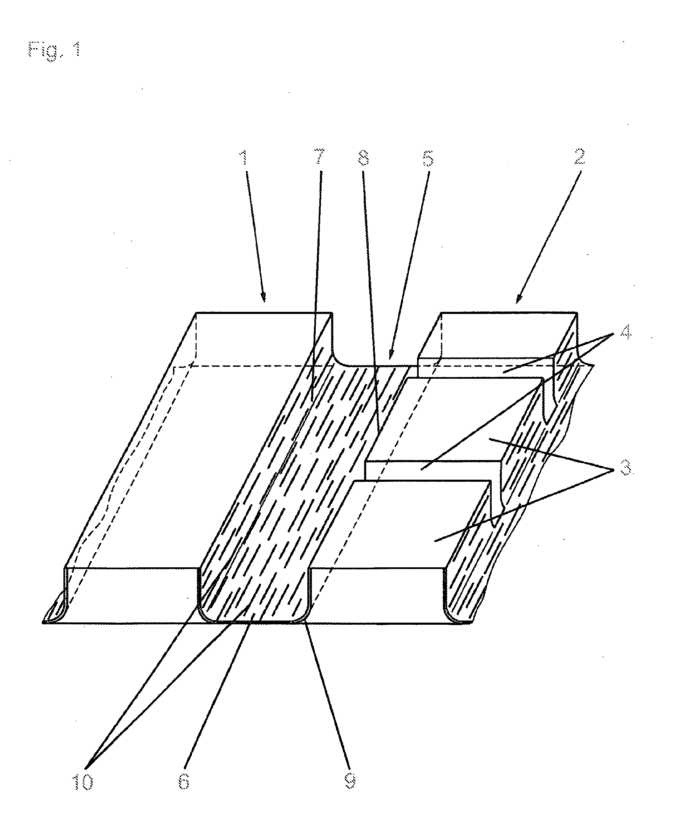

Fig. 1, eine Ansicht auf Profilelemente im Laufstreifen eines Fahrzeugluftreifens.

Laufstreifen von Fahrzeugluftreifen weisen als Profilelemente üblicherweise in Umfangsrichtung umlaufende Blockreihen, gegebenenfalls in Kombination mit Umfangsrippen, auf. Diese Profilelemente sind voneinander durch in Umfangsrichtung verlaufende Nuten getrennt, die, je nach Profilcharakteristik, als gerade umlaufende Umfangsnuten oder als in leichter Zickzack- oder Wellenform umlaufende Umfangsnuten ausgebildet sind.

Die einzige Zeichnungsfigur zeigt beispielhaft eine Ansicht auf einen Abschnitt eines Laufstreifens eines Fahrzeugluftreifens mit einer Profilrippe 1 und einer dieser benachbarten Blockreihe 2. Die Profilrippe 1 ist ohne Strukturierung dargestellt, kann jedoch mit schmalen Einschnitten, Sacknuten oder dergleichen versehen sein. Die Blockreihe 2 setzt sich in Umfangsrichtung aus Einzelblöcken 3 zusammen, die voneinander durch Quernuten 4 getrennt sind. Zwischen der dargestellten Profilrippe 1 und der Blockreihe 2 verläuft eine in Umfangsrichtung umlaufende Umfangsnut 5, weitere Umfangsnuten können außenseitig an die Profilrippe 1 und die Blockreihe 2 anschließen.

Die im Querschnitt im Wesentlichen U-förmige Umfangsnut 5 ist von einer Rippenflanke 7, dieser gegenüber befindlichen Blockflanken 8 und einem Nutboden 6 begrenzt. Die Übergänge zwischen der Rippenflanke 7 und dem Nutboden 6 sowie den Blockflanken 8 und dem Nutboden 6 sind jeweils fließend, da die Umfangsnut 5 im Querschnitt eine gerundete U-Form aufweist. Sowohl die Rippenflanke 7 als auch die Blockflanken 8 verlaufen im Wesentlichen in radialer Richtung oder unter einem von der radialen Richtung nur geringfügig abweichenden spitzen Winkel in der Größenordnung von bis zu 25°. Die Umfangsnut 5 ist mit einer dünnen Schicht 9 aus faserverstärktem Gummi ausgekleidet. Die Schicht 9 bedeckt daher die Flanken 7, 8 und den Nutboden 6 und ist anisotrop ausgeführt, da die in der Schicht 9 enthaltenen Kurzfasern 10 eine bevorzugte Ausrichtung in der Umfangsrichtung des Reifens aufweisen. Die faserverstärkte Gummischicht 9 weist in der Umfangsrichtung - bei der dargestellten Ausführungsvariante ist dies auch die Längsrichtung der Fasern 10 - einen Elastizitätsmodul E₁ (ermittelt gemäß DIN 53504) auf, welcher das Zwei- bis Zwanzigfache des Elastizitätsmoduls Eq (ermittelt gemäß DIN 53504) quer zur Umfangsrichtung, quer zur Erstreckung der Fasern 10, beträgt. Die "Querrichtung" ist im Bereich der Rippenflanke 7 und der Blockflanken 8 die radiale Richtung, am Nutgrund 6 die laterale Richtung. Der Elastizitätsmodul E₁ beträgt bei 25 % Dehnung zwischen 4 MPa und 20 MPa, insbesondere 10 MPa bis 15 MPa, der Elastizitätsmodul Eq bei 25 % Dehnung zwischen 0,5 MPa und 3 MPa, insbesondere zwischen 1 MPa und 2 MPa. Besonders vorteilhaft ist ein Verhältnis des Elastizitätsmoduls E₁ zum Elastizitätsmodul Eq von 7 bis 10.

Die Dicke der faserverstärkten Gummischicht 9 beträgt zwischen 0,2 mm und 2 mm. Die Gummischicht 9 kann aus einer oder mehreren Lage(n) faserverstärkter Kautschukmischung hergestellt sein. Die Fasern 10 in der Gummischicht 9 können ferner derart orientiert sein, dass sie mit der Umfangsrichtung einen Winkel von bis zu 60°, insbesondere zwischen 0° und 30°, einschließen. Wird die faserverstärkte Gummischicht 9 aus mehreren Lagen von faserverstärkten Kautschukmischungen hergestellt, so können die Fasern in den Kautschukmischungen zur Umfangsrichtung unterschiedlich orientiert sein.

Eine ein- oder mehrlagige faserverstärkte Gummischicht 9 in Umfangsnuten 5 wird beispielsweise bei der Herstellung des Reifens derart erstellt, dass ein Streifen aus faserverstärkten Kautschukmischungen oder mehrere Streifen aus faserverstärkten Kautschukmischungen auf den bereits aufgebrachten, unvulkanisierten Laufstreifen in den späteren Positionen der Umfangsnuten in entsprechender Breite aufdoubliert wird bzw. werden. Die Mischungsstreifen werden daher so positioniert, dass sie beim Einformen des Rohreifens in der Vulkanisationsform in die gebildeten Profilrillen hinein gedrückt werden. Alternativ dazu kann der komplette Laufstreifen mit zumindest einem entsprechend breiten Mischungsstreifen belegt werden.

Die Materialstreifen mit den orientierten Fasern werden beispielsweise durch Kalandrieren der Mischungen oder mittels Extrusion hergestellt. Die Kurzfasern bewirken eine stark erhöhte Mooney-Viskosität in der Mischung im Vergleich zur Laufstreifenmischung. Die hohe Viskosität stellt sicher, dass die faserverstärkten Kautschukstreifen beim Einformen des Laufstreifenprofils nicht durchtrennt werden. Dadurch ist auch gewährleistet, dass die faserverstärkte Mischung gleichmäßig über die Flanken der Rippen und Blöcke und den Nutboden verteilt wird.

Die faserverstärkte Gummischicht erhöht die Block- und Rippensteifigkeit in Umfangsrichtung. Der wesentlich niedrigere Elastizitätsmodul Eq in Radialrichtung ist einerseits für gute Komforteigenschaften und andererseits für eine geringe Geräuschentwicklung von Vorteil. Der niedrige Elastizitätsmodul Eq in der Lateralrichtung am Nutboden 6 verhindert das Entstehen von Rissen im Nutboden 6. Die in der Gummischicht 9 enthaltenen Kurzfasern können aus organischen und/oder anorganischen Materialien bestehen, beispielsweise aus Amiden (PA6, PA66, Aramide), Polyester, Rayon, Hybridmaterialien, Kohlefasern und Glasfasern, und weisen eine Dicke im Bereich zwischen 0, 005 mm und 0,1 mm auf und eine Länge zwischen 0,5 mm und 10 mm auf.

Anstelle einer faserverstärkten Gummischicht kann ein gummiertes Gewebe die Auskleidung der Umfangsnuten 5 bilden. Als Material für das Gewebe kommen Amide, Polyester, Rayon, Hybridmaterialien und dergleichen in Frage. Die Kettfäden des Gewebes verlaufen unter einem Winkel von 0° bis 60° zur Umfangsrichtung, insbesondere unter einem Winkel zwischen 0° und 30°. Die Dicke der Fäden beträgt zwischen 0,3 mm und 0,8mm. Auch bei dieser Ausführungsvariante können mehrere Lagen eines gummierten Gewebes die Schicht an den Rippenflanken und den Blockflanken sowie dem Nutgrund von Umfangsnuten bilden. Werden mehrere Gewebelagen verwendet, so können deren Kettfäden unter unterschiedlichen Winkeln zur Umfangsrichtung orientiert sein.

In Folge der erhöhten Schnittfestigkeit bietet die erfindungsgemäße Gummischicht auch einen Schutz vor dem Eindringen von Fremdkörpern.

### Bezugszeichenliste

- 1: Rippe
- 2: Blockreihe
- 3: Blöcke
- 4: Quernut
- 5: Umfangsnut
- 6: Nutboden
- 7: Rippenflanke
- 8: Blockflanke
- 9: Gummischicht
- 10: Kurzfasern

## Patentansprüche

1. Fahrzeugluftreifen mit einem profilierten Laufstreifen mit in Umfangsrichtung umlaufenden Profilelementen, wie Profilrippen (1) und Blockreihen (2), und zumindest einer sich in Umfangsrichtung erstreckenden Profilelemente voneinander trennenden Umfangsnut (5), deren seitliche Flanken (7) und deren Nutboden (6) mit einer anisotropen Gummischicht (9), welche Kurzfasern oder Fäden als Festigkeitsträger enthält, bedeckt sind,
**dadurch gekennzeichnet,**
**dass** die mit Fasern oder Fäden verstärkte Gummischicht (9) in Umfangsrichtung einen Elastizitätsmodul (E₁) aufweist, der größer ist als ihr Elastizitätsmodul (E_{q}) quer zur Umfangsrichtung, wobei das Verhältnis des Elastizitätsmodul in Umfangsrichtung zu jenem quer zur Umfangsrichtung zwischen 2 und 20 beträgt.

2. Fahrzeugluftreifen nach Anspruch 1, **dadurch gekennzeichnet, dass** das Verhältnis des Elastizitätsmoduls (E₁) in Umfangsrichtung zu jenem quer zur Umfangsrichtung zwischen 7 und 10 beträgt.

3. Fahrzeugluftreifen nach Anspruch 1 oder 2, **dadurch gekennzeichnet, dass** die Kurzfasern (10) oder Fäden zur Längsrichtung unter einem Winkel von 0° bis 60°, insbesondere von 0° bis 30°, orientiert sind:

4. Fahrzeugluftreifen nach einem der Ansprüche 1 bis 3, **dadurch gekennzeichnet, dass** die Gummischicht (4) aus mehreren Lagen von mit Kurzfasern (10) oder Fäden verstärkten Kautschukmischungen hergestellt ist.

5. Fahrzeugluftreifen nach Anspruch 4, **dadurch gekennzeichnet, dass** die Orientierung der Kurzfasern oder Fäden zur Umfangsrichtung in diesen Lagen unterschiedlich ist.

6. Fahrzeugluftreifen nach einem der Ansprüche 1 bis 5, **dadurch gekennzeichnet, dass** die Kurzfasern (10) oder Fäden aus organischen und/oder anorganischen Materialien bestehen.

7. Fahrzeugluftreifen nach einem der Ansprüche 1 bis 6, **dadurch gekennzeichnet, dass** die Dicke der Kurzfasern zwischen 0,005 mm und 0,1 mm beträgt.

8. Fahrzeugluftreifen nach einem der Ansprüche 1 bis 6, **dadurch gekennzeichnet, dass** die Länge der Kurzfasern zwischen 0,5 mm und 10 mm beträgt.

9. Fahrzeugluftreifen nach einem der Ansprüche 1 bis 6, **dadurch gekennzeichnet, dass** die Dicke der Fäden zwischen 0,3 mm und 0,8 mm beträgt.

10. Fahrzeugluftreifen nach einem der Ansprüche 1 bis 6 oder 9, **dadurch gekennzeichnet, dass** die Fäden die Kettfäden eines Gewebes sind.

11. Fahrzeugluftreifen nach einem der Ansprüche 1 bis 10, **dadurch gekennzeichnet, dass** die Dicke der mit Kurzfasen oder Fäden verstärkten Gummischicht (9) zwischen 0,2 mm und 2 mm beträgt.

12. Fahrzeugluftreifen nach einem der Ansprüche 1 bis 11, **dadurch gekennzeichnet, dass** der Elastizitätsmodul (E₁) der Gummischicht (9) in Umfangsrichtung zwischen 4 MPa und 20 MPa, insbesondere zwischen 10 MPa und 15 MPa, beträgt.

13. Fahrzeugluftreifen nach einem der Ansprüche 1 bis 11, **dadurch gekennzeichnet, dass** der Elastiztitätsmodul (E_{q}) der Gummischicht (9) quer zur Umfangsrichtung zwischen 0,5 MPa und 3 MPa, insbesondere zwischen 1 MPa und 2 MPa, beträgt.

## Claims

1. Pneumatic vehicle tyre with a profiled tread rubber with profile elements running around in the circumferential direction, such as profile ribs (1) and rows of blocks (2), and at least one circumferential groove (5), which extends in the circumferential direction, separates profile elements from one another and the side flanks (7) and groove base (6) of which are covered with an anisotropic rubber layer (9), which contains short fibres or filaments as reinforcing elements, **characterized in that** the rubber layer (9) reinforced with fibres or filaments has a modulus of elasticity (E₁) in the circumferential direction that is greater than its modulus of elasticity (Eq) transversely to the circumferential direction, the ratio of the modulus of elasticity in the circumferential direction to that transversely to the circumferential direction being between 2 and 20.

2. Pneumatic vehicle tyre according to Claim 1, **characterized in that** the ratio of the modulus of elasticity (E₁) in the circumferential direction to that transversely to the circumferential direction is between 7 and 10.

3. Pneumatic vehicle tyre according to Claim 1 or 2, **characterized in that** the short fibres (10) or filaments are oriented in relation to the longitudinal direction at an angle of from 0° to 60°, in particular from 0° to 30°.

4. Pneumatic vehicle tyre according to one of Claims 1 to 3, **characterized in that** the rubber layer (4) is produced from a number of plies of rubber compounds reinforced with short fibres (10) or filaments.

5. Pneumatic vehicle tyre according to Claim 4, **characterized in that** the orientation of the short fibres or filaments in relation to the circumferential direction varies in these plies.

6. Pneumatic vehicle tyre according to one of Claims 1 to 5, **characterized in that** the short fibres (10) or filaments consist of organic and/or inorganic materials.

7. Pneumatic vehicle tyre according to one of Claims 1 to 6, **characterized in that** the thickness of the short fibres is between 0.005 mm and 0.1 mm.

8. Pneumatic vehicle tyre according to one of Claims 1 to 6, **characterized in that** the length of the short fibres is between 0.5 mm and 10 mm.

9. Pneumatic vehicle tyre according to one of Claims 1 to 6, **characterized in that** the thickness of the filaments is between 0.3 mm and 0.8 mm.

10. Pneumatic vehicle tyre according to one of Claims 1 to 6 or 9, **characterized in that** the filaments are the warp threads of a woven fabric.

11. Pneumatic vehicle tyre according to one of Claims 1 to 10, **characterized in that** the thickness of the rubber layer (9) reinforced with short fibres or filaments is between 0.2 mm and 2 mm.

12. Pneumatic vehicle tyre according to one of Claims 1 to 11, **characterized in that** the modulus of elasticity (E₁) of the rubber layer (9) in the circumferential direction is between 4 MPa and 20 MPa, in particular between 10 MPa and 15 MPa.

13. Pneumatic vehicle tyre according to one of Claims 1 to 11, **characterized in that** the modulus of elasticity (Eq) of the rubber layer (9) transversely to the circumferential direction is between 0.5 MPa and 3 MPa, in particular between 1 MPa and 2 MPa.

## Revendications

1. Bandage pneumatique pour roue de véhicule, qui présente une bande de roulement profilée doté d'éléments profilés périphériques qui s'étendent dans la direction de la périphérie, par exemple des nervures profilées (1) et des rangées de blocs (2), et
d'au moins une rainure périphérique (5) qui sépare les uns des autres les éléments profilés qui s'étendent dans la direction de la périphérie et dont les flancs latéraux (7) et les fonds de rainure (6) sont recouverts d'un mélange de caoutchouc (9) anisotrope qui contient des fibres courtes ou des fils comme renforts,
**caractérisé en ce que**
dans la direction de la périphérie, le module d'élasticité (E₁) de la couche de caoutchouc (9) renforcée par des fibres ou des fils est supérieur à son module d'élasticité (Eq) dans la direction transversale par rapport à la direction périphérique et
**en ce que** le rapport entre le module d'élasticité dans la direction périphérique et celui dans la direction transversale par rapport à la direction périphérique est compris entre 2 et 20.

2. Bandage pneumatique pour roue de véhicule selon la revendication 1, **caractérisé en ce que** le rapport entre le module d'élasticité (E₁) dans la direction périphérique et celui dans la direction transversale par rapport à la direction périphérique est compris entre 7 et 10.

3. Bandage pneumatique pour roue de véhicule selon les revendications 1 ou 2, **caractérisé en ce que** les fibres courtes (10) ou les fils sont orientés sous un angle de 0° à 60° et en particulier de 0° à 30° par rapport au sens de la longueur.

4. Bandage pneumatique pour roue de véhicule selon l'une des revendications 1 à 3, **caractérisé en ce que** la couche de caoutchouc (4) est constituée de plusieurs couches de mélanges de caoutchouc renforcés par des fibres courtes (10) ou des fils.

5. Bandage pneumatique pour roue de véhicule selon la revendication 4, **caractérisé en ce que** l'orientation des fibres courtes ou des fils par rapport à la direction périphérique est différente dans ces couches.

6. Bandage pneumatique pour roue de véhicule selon l'une des revendications 1 à 5, **caractérisé en ce que** les fibres courtes (10) ou les fils sont constitués de matériaux organiques et/ou de matériaux minéraux.

7. Bandage pneumatique pour roue de véhicule selon l'une des revendications 1 à 6, **caractérisé en ce que** l'épaisseur des fibres courtes est comprise entre 0,005 mm et 0,1 mm.

8. Bandage pneumatique pour roue de véhicule selon l'une des revendications 1 à 6, **caractérisé en ce que** la longueur des fibres courtes est comprise entre 0,5 mm et 10 mm.

9. Bandage pneumatique pour roue de véhicule selon l'une des revendications 1 à 6, **caractérisé en ce que** l'épaisseur des fils est comprise entre 0,3 mm et 0,8 mm.

10. Bandage pneumatique pour roue de véhicule selon l'une des revendications 1 à 6 ou 9, **caractérisé en ce que** les fils sont les fils de chaîne d'un tissu.

11. Bandage pneumatique pour roue de véhicule selon l'une des revendications 1 à 10, **caractérisé en ce que** l'épaisseur de la couche de caoutchouc (9) renforcée par des fibres courtes ou des fils est comprise entre 0,2 mm et 2 mm.

12. Bandage pneumatique pour roue de véhicule selon l'une des revendications 1 à 11, **caractérisé en ce que** le module d'élasticité (E₁) de la couche de caoutchouc (9) dans la direction périphérique est compris entre 4 MPa et 20 MPa et en particulier entre 10 MPa et 15 MPa.

13. Bandage pneumatique pour roue de véhicule selon l'une des revendications 1 à 11, **caractérisé en ce que** le module d'élasticité (Eq) de la couche de caoutchouc (9) dans la direction transversale par rapport à la direction périphérique est compris entre 0,5 MPa et 3 MPa et en particulier entre 1 MPa et 2 MPa.
